# EUROPÄISCHE PATENTSCHRIFT

(11) **EP 1 752 741 B1**
(45) Veröffentlichungstag und Bekanntmachung des Hinweises auf die Patenterteilung: **17.10.2007**
(21) Anmeldenummer: 06014536.4
(22) Anmeldetag: 13.07.2006
(51) Int. Cl.: G01D 11/00

(54) **Drehgeber**
Rotary encoder
Encodeur

(30) Priorität: 12.08.2005 DE 102005038570
(43) Veröffentlichungstag der Anmeldung: 14.02.2007
(73) Patentinhaber: SICK STEGMANN GmbH, 78166 Donaueschingen (DE)
(72) Erfinder: Mutschler, Reinhold, 78056 Villingen-Schwenningen (DE); Gelbke, Dieter, 78166 Donaueschingen (DE); Siraky, Josef, 78166 Donaueschingen (DE)
(74) Vertreter: Patentanwälte Westphal, Mussgnug & Partner

(56) Entgegenhaltungen:
- EP-A1- 0 682 229
- EP-A1- 1 517 120
- DE-A1- 10 215 997

## Beschreibung

Die Erfindung betrifft einen Drehgeber gemäß dem Oberbegriff des Patentanspruchs 1.

Drehgeber dienen zur Messung von Winkelgrößen, wie Winkelposition, Winkelgeschwindigkeit, Winkelbeschleunigung rotierender Bauteile, insbesondere der Welle eines Motors. Der Drehgeber weist eine Geberwelle auf, die drehfest mit der zu messenden Antriebswelle gekuppelt wird. Mit der Geberwelle dreht sich direkt oder über ein Getriebe verbunden eine Maßverkörperung, die durch eine geeignete Abtastung, z. B. optisch oder magnetisch, abgetastet wird.

Um die Geberwelle in einfacher und vielseitig einsetzbarer Weise mit der zu messenden Antriebswelle zu kuppeln, weist ein aus der EP 0 682 229 A1 bekannter Drehgeber der eingangs genanten Gattung eine Geberwelle auf, die koaxial auf die Antriebswelle gesteckt wird und mittels einer in der Geberwelle angeordneten Spannzange auf der Antriebswelle geklemmt wird.

Da die Antriebswelle hierbei in einer Sackbohrung der Geberwelle sitzt, ist die axiale Anordnung des Drehgebers in Bezug auf die Antriebswelle festgelegt. Die exakte axiale Fluchtung der Geberwelle mit der Antriebswelle wird nur durch die Spannzange sichergestellt.

Als weiterer Stand der Technik wird die EP 1 517 120 A1 genannt.

Der Erfindung liegt die Aufgabe zugrunde, einen Drehgeber zu schaffen, der in einfacher Weise vielseitiger und mit hoher Präzision an einer Antriebswelle montiert werden kann.

Diese Aufgabe wird erfindungsgemäß gelöst durch einen Drehgeber mit den Merkmalen des Patentanspruchs 1.

Vorteilhafte Ausführungen der Erfindung sind in den Unteransprüchen angegeben.

Erfindungsgemäß ist die Geberwelle als durchgehend hohle Welle ausgebildet, die auf die zu messende Antriebswelle aufgeschoben werden kann. Auf der Antriebswelle wird die hohle Geberwelle durch zwei Spannzangen geklemmt, die jeweils an einem Ende der Geberwelle wirksam sind. Dadurch kann die Geberwelle und damit der gesamte Drehgeber in einer beliebigen axialen Lage auf der Antriebswelle geklemmt werden, so dass sich eine hohe Flexibilität im Einsatz und in den Anbaumöglichkeiten ergibt. Die Klemmung der Geberwelle mittels der Spannzangen ergibt eine hohe Drehfestigkeit der Kupplung zwischen der Geberwelle und der Antriebswelle. Die Klemmung mittels der Spannzangen passt sich dem Durchmesser der Antriebswelle an, so dass der Drehgeber für einen gewissen Durchmesserbereich anwendbar ist und Durchmesser-Toleranzen der Antriebswelle aufnimmt. Durch die Klemmung der Geberwelle an ihren beiden Enden jeweils mittels einer Spannzange ergibt sich eine gute koaxiale Anordnung der Geberwelle in Bezug auf die Achse der Antriebswelle, so dass eine hohe Rundlaufgenauigkeit des Drehgebers erreicht wird.

Die eine Spannzange ist als Spannhülse ausgebildet, die die hohle Geberwelle koaxial durchsetzt. Dadurch sind beide Spannzangen an demselben Ende der Geberwelle zugänglich und ein Kraftelement kann eine axiale Kraft auf beide Spannzangen ausüben. Die Spannzangen werden gegeneinander und gegen die Geberwelle axial beaufschlagt und verspannt. Dies ermöglicht eine einfache Montage, da nur ein einziges Kraftelement zum Klemmen der Spannzangen an beiden Enden der Geberwelle erforderlich ist.

Vorzugsweise greifen die Spannzangen jeweils mit Konusflächen zwischen die Geberwelle und die Antriebswelle. Die Spannzangen sind dabei vorzugsweise jeweils mit einem Umfangsflansch ausgebildet, wobei das Kraftelement an den Umfangsflanschen der beiden Spannzangen angreift und diese axial gegeneinander bewegt. Dadurch wird die eine Spannzange in die Geberwelle axial hineingedrückt, während die als Spannhülse ausgebildete andere Spannzange am entgegengesetzten Ende der Geberwelle in diese hineingezogen wird.

Für die Montage und Demontage können die Spannzangen durch eine Entriegelungseinrichtung in ihrer unwirksamen Stellung gehalten werden.

Das Kraftelement kann beispielsweise als eine Feder ausgebildet sein, die zwischen die Umfangsflansche der Spannzangen eingesetzt ist und diese auseinander drückt. In einer anderen Ausführung kann das Kraftelement ein Keilring sein, der zwischen die Umfangsflansche eingreift, um diese axial auseinander zu drücken. In einer weiteren Ausführung kann das Kraftelement ein Spannring sein, der die Umfangsflansche der Spannzangen von außen umgreift, auf konische Außenflächen der Umfangsflansche einwirkt und diese axial gegeneinander zieht.

Da die Geberwelle und damit der Drehgeber insgesamt nur über die Spannzangen mit der Antriebswelle in Berührung kommt, kann der Drehgeber in einfacher Weise zuverlässig gegen die Antriebswelle elektrisch isoliert werden, indem die Spannzangen aus einem elektrisch isolierenden Werkstoff, insbesondere einem Kunststoff, hergestellt werden.

Im folgenden wird die Erfindung anhand von in der Zeichnung dargestellten Ausführungsbeispielen näher erläutert. Es zeigen:
- Figur 1: perspektivisch einen auf eine Antriebswelle geklemmten Drehgeber mit teilweise aufgebrochenem Gehäuse,
- Figur 2: perspektivisch die auf die Antriebswelle geklemmte Geberwelle,
- Figur 3: in Seitenansicht die auf die Antriebswelle geklemmte Geberwelle,
- Figur 4: in perspektivischer Explosionsdarstellung die Spannzangen-Einrichtung dieses Drehgebers,
- Figur 5: perspektivisch die auf die Antriebswelle geklemmte Geberwelle in einer zweiten Ausführung,
- Figur 6: die Spannzangen-Einrichtung dieser zweiten Ausführung in Seitenansicht und
- Figur 7: in perspektivischer Explosionsdarstellung die Spannzangen-Einrichtung dieser zweiten Ausführung.

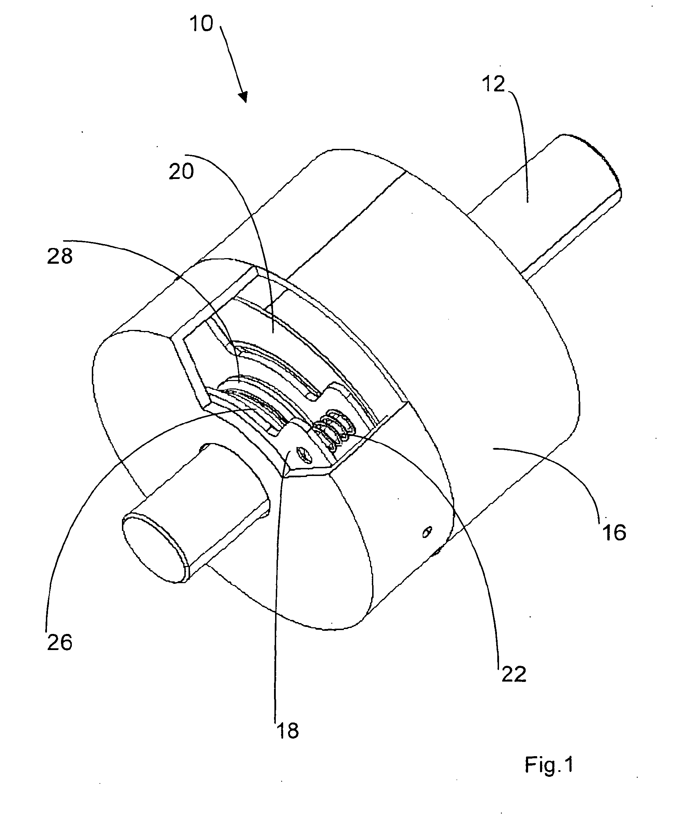

Figur 1 zeigt einen Drehgeber 10, der zur Messung von Winkelgrößen einer Antriebswelle 12 dient. Die Antriebswelle 12 ist beispielsweise die Welle eines Elektromotors, deren Winkelposition, Winkelgeschwindigkeit und gegebenenfalls Winkelbeschleunigung mittels des Drehgebers 10 gemessen wird, um den Elektromotor z. B. für einen Stellantrieb zu regeln.

Der Drehgeber 10 weist eine Geberwelle 14 auf, die in nachfolgend im einzelnen beschriebener Weise drehfest mit der Antriebswelle 12 gekuppelt wird. Mit der Geberwelle 14 dreht sich eine Maßverkörperung, die beispielsweise aus einer Inkrementalscheibe oder einer Codescheibe besteht. Die Maßverkörperung wird durch eine Abtastung abgetastet, die fest in einem inneren Gehäuseteil 20 des Gehäuses 16 des Drehgebers 10 angeordnet ist. Die Geberwelle 14 ist drehbar in dem Gehäuseteil 20 gelagert. Das Gehäuse 16 wird drehfest an dem Motorgehäuse der Antriebswelle 12 montiert, so dass die Abtastung die Winkelstellung der Antriebswelle 12 in Bezug auf das Motorgehäuse misst. Um Zentrierungs- und Fluchtungsfehler beim Anbau des Drehgebers 10 an dem zu messenden Motor aufzunehmen, wird der Drehgeber 10 mit einer nicht dargestellten Statorkupplung drehmomentsteif federnd an dem Motorgehäuse montiert.

Gegenstand der Erfindung ist die Kupplung der Geberwelle 14 mit der Antriebswelle 12.

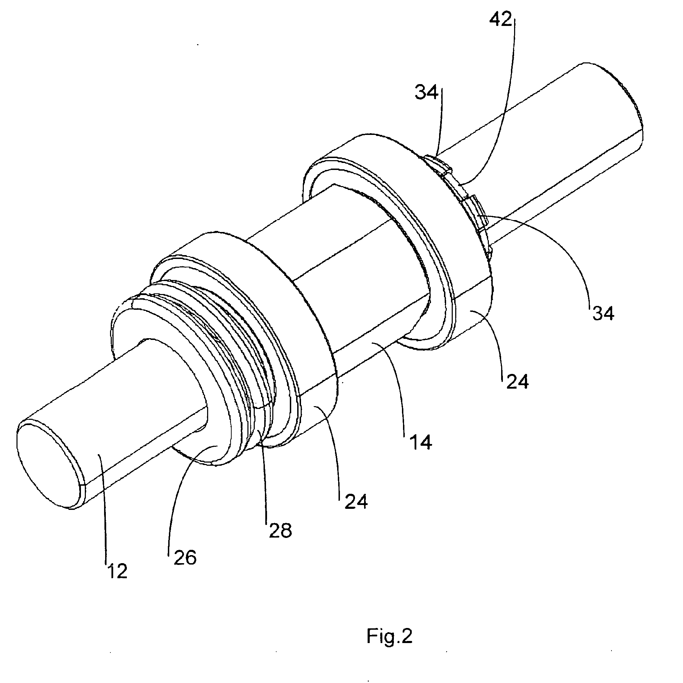

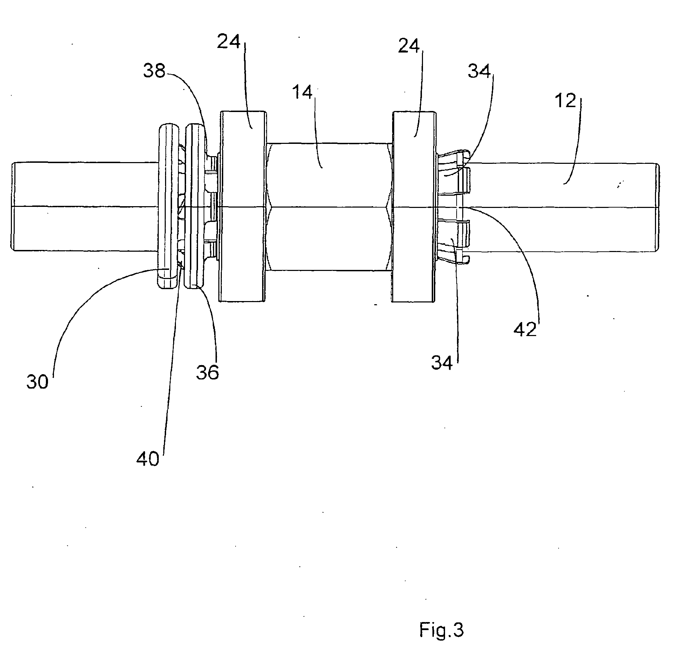

In einer in den Figuren 1 bis 4 dargestellten ersten Ausführung ist die Geberwelle 14 als hohle Welle ausgebildet, deren Innendurchmesser so gewählt ist, dass die Geberwelle 14 mit radialem Spiel auf die Antriebswelle 12 aufgeschoben werden kann. Auf die axialen Enden der Geberwelle 14 ist jeweils ein Radialwälzlager 24 mit seinem Innenring aufgepresst. Der Außenring der Radialwälzlager 24 trägt das Gehäuseteil 20 mit der Abtastung. Die Geberwelle 14 und damit der Drehgeber 10 können auf der Antriebswelle 12 axial beliebig justiert und positioniert werden, worauf die Geberwelle 14 und damit der Drehgeber 10 in der nachfolgend beschriebenen Weise auf der Antriebswelle 12 geklemmt werden.

Zur Klemmung der Geberwelle 14 auf der Antriebswelle 12 dienen zwei Spannzangen, von denen die eine als Spannhülse 26 und die andere als Spannring 28 ausgebildet ist.

Die Spannhülse 26 weist einen Umfangsflansch 30 auf, an welchem Spannarme 32 angeformt sind. Der Umfangsflansch 30 hat im wesentlichen die Form einer Kreisscheibe, deren freier Innenquerschnitt im wesentlichen dem Umfangsquerschnitt der Antriebswelle 12 entspricht. Die Spannarme 32 sind am Innenrand des Umfangsflansches 30 angeformt und als axiale Zungen ausgebildet, die in gleichem Winkelabstand angeordnet sind und durch axiale Schlitze voneinander getrennt sind. Im dargestellten Ausführungsbeispiel sind sechs jeweils um 60° gegeneinander versetzte Spannarme 32 vorgesehen. Die axiale Länge der Spannarme 32 ist größer als die axiale Länge der Geberwelle 14. An ihrem dem Umfangsflansch 30 entgegengesetzten Ende gehen die Spannarme 32 in Spannbacken 34 über, die eine zur Mittelachse der Spannhülse 26 konische Außenfläche aufweisen, die gegen das freie Ende der Spannarme 32 hin radial ansteigt.

Der Spannring 28 weist ebenfalls einen Umfangsflansch 36 auf, der die Form einer Kreisringscheibe hat. Der freie Innendurchmesser des Umfangsflansches 36 entspricht dem Außenumfangsdurchmesser der Spannarme 32. An dem Innenumfang des Umfangsflansches 36 sind Spannbacken 38 angeformt, die in der Weise im Winkel gegeneinander versetzt und beabstandet angeordnet sind, dass sie in die axialen Schlitze zwischen den Spannarmen 32 eingreifen, wenn der Spannring 28 auf die Spannhülse 26 aufgeschoben wird. Die Spannbacken 38 weisen von dem Umfangsflansch 36 in dieselbe Richtung wie die Spannarme 32 der Spannhülse 26 und sind mit einer zur Mittelachse konischen Au-ßenfläche ausgebildet, die von dem Umfangsflansch 36 zum freien Ende der Spannbacken 38 radial abfällt.

Zwischen die einander zugewandten Stirnflächen der Umfangsflansche 30 und 36 wird eine Wellfederscheibe 40 eingesetzt, die als Kraftelement die Umfangsflansche 30 und 36 axial auseinander drückt.

Für die Montage der Einzelteile des Drehgebers 10 wird zunächst die Wellfederscheibe 40 vom freien Ende der Spannarme 32 her auf die Spannhülse 26 geschoben. Anschließend wird ebenfalls vom freien Ende der Spannarme 32 her der Spannring 28 auf die Spannhülse 26 geschoben, wobei der Umfangsflansch 36 des Spannringes 28 dem Umfangsflansch 30 der Spannhülse 26 und der Wellfederscheibe 40 zugewandt ist. Bei dem Aufschieben des Spannringes 28 auf die Spannhülse 26 greifen die Spannbacken 38 des Spannringes 28 in die freien Schlitze zwischen den Spannarmen 32 der Spannhülse 26 ein. Die Spannbacken 38 fügen sich dabei mit dem Außenumfang ihrer freien Enden in den Außenumfang der Spannarme 32 ein und steigen radial gegen den Umfangsflansch 36 hin über den Außenumfang der Spannarme 32 an. Das Aufschieben der Wellfederscheibe 40 und des Spannringes 28 auf die Spannhülse 26 wird dadurch ermöglicht, dass die Spannarme 32 und deren Spannbacken 34 radial federnd zusammengedrückt werden.

Anschließend wird der Drehgeber 10 mit seiner hohlen Geberwelle 14 auf die Spannhülse 26 geschoben, wozu wiederum die Spannarme 32 mit ihren Spannbacken 34 radial zusammengedrückt werden. Die Spannarme 32 können gegebenenfalls in axialen Nuten im Innenumfang der Geberwelle 14 aufgenommen werden, so dass die Spannhülse 26 die radialen Abmessungen nicht vergrößert. Anschließend wird ein Stützring 42 in die freien Enden der Spannarme 32 eingerastet. Hierzu weisen die zur Bildung der Spannbacken 34 radial nach außen abgewinkelten freien Enden der Spannarme 32 Rastausnehmungen 44 auf, in welche der Stützring 42 einschnappt. Der Stützring 42 weist radial nach außen gerichtete Vorsprünge 46 auf, die in die freien Schlitze zwischen den Spannbacken 34 eingreifen. Der eingerastete Stützring 42 stützt die nach außen abgewinkelten Spannbacken 34 radial ab, so dass diese nicht mehr nach innen gebogen werden können und ihren Winkelabstand zueinander halten.

Für die Montage des Drehgebers 10 auf der Antriebswelle 12 ist es erforderlich, die Spannbacken 34 und 38 zu entlasten und von der Klemmanlage an der Geberwelle 14 axial weg zu bewegen. Hierzu sind die Umfangsflansche 30 und 36 axial zwischen Entriegelungsplatten 18 angeordnet. Durch Verdrehen einer Abdeckkappe 19 des Gehäuses 16 werden in Umfangsrichtung ansteigende schräge Ebenen gegen die Entriegelungsplatten 18 gedrückt, wodurch diese axial gegeneinander bewegt werden und die Umfangsflansche 30 und 36 gegen die Kraft der Wellfederscheibe 40 zusammendrücken und zusammengedrückt halten. Der Spannring 28 und die Spannhülse 26 werden dadurch gegeneinander verschoben und deren Spannbacken 38 und 34 werden entlastet und unwirksam. Der Drehgeber 10 kann somit frei auf die Antriebswelle 12 geschoben und auf dieser axial justiert werden.

Nach dem Aufstecken des Drehgebers 10 auf die Antriebswelle 12 und der Befestigung der Statorkupplung wird die Abdeckkappe 19 wieder in ihre Ruheposition zurückgedreht. Die schrägen Ebenen geben die Entriegelungsplatten 18 frei und diese werden durch Federn 22 axial auseinander gedrückt und von den Umfangsflanschen 30 und 36 weg bewegt. Die Wellfederscheibe 40 kann nun wirksam werden und die Spannhülse 26 und den Spannring 28 gegeneinander verschieben.

Dadurch wird einerseits der Spannring 28 mit seinen Spannbacken 38 gegen die Geberwelle 14 gedrückt, wobei sich die Spannbacken 38 radial zwischen dem Innenumfang der Geberwelle 14 und dem Außenumfang der Antriebswelle 12 radial verklemmen. Weiter wird durch die axiale Kraft der Wellfederscheibe 40 der Umfangsflansch 30 der Spannhülse 36 axial von der Geberwelle 14 weggedrückt. Dadurch werden die an den entgegengesetzten Enden der Spannarme 32 angeformten Spannbacken 34 axial in die Geberwelle 14 gezogen und verklemmen sich radial zwischen dem Innenumfang der Geberwelle 14 und dem Außenumfang der Antriebswelle 12. Die Geberwelle 14 ist dadurch an ihrem einen axialen Ende durch die Spannbacken 38 des Spannringes 28 und an ihrem anderen Ende durch die Spannbacken 34 der Spannhülse 26 auf der Antriebswelle 12 geklemmt.

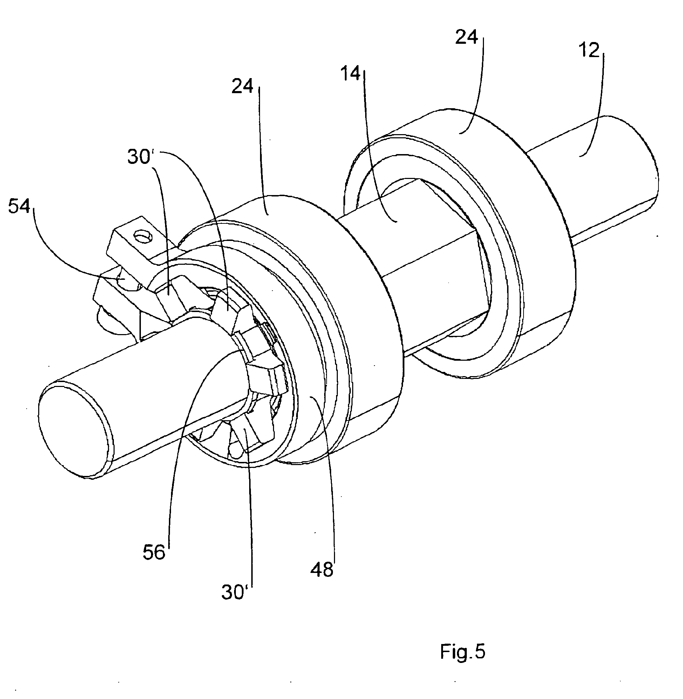

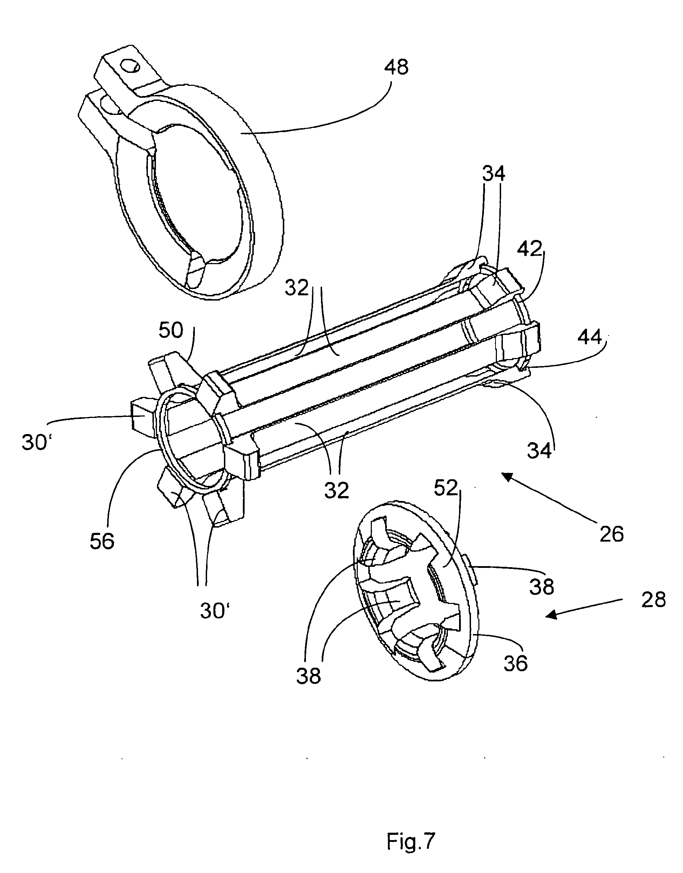

Eine zweite Ausführung der Spannzangen-Einrichtung ist in den Figuren 5 bis 7 dargestellt. Soweit Übereinstimmung mit dem ersten Ausführungsbeispiel besteht, sind dieselben Bezugszeichen verwendet und auf die vorangehende Beschreibung wird Bezug genommen.

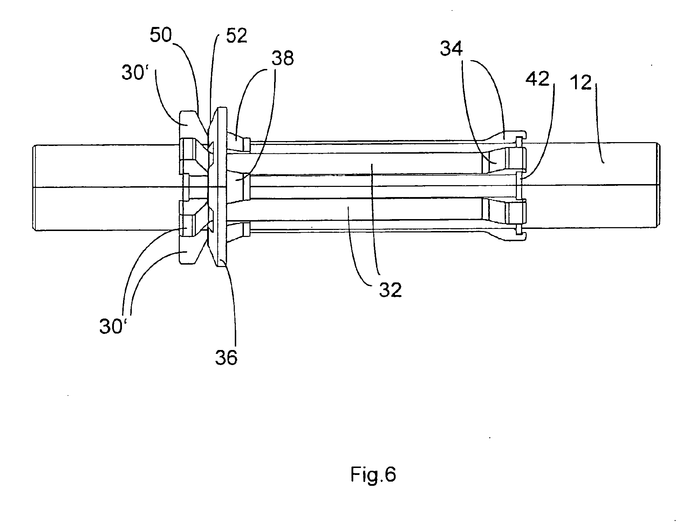

Der wesentliche Unterschied gegenüber der ersten Ausführungsform besteht in der Ausbildung des Kraftelements, welches die Spannhülse 26 und den Spannring 28 gegeneinander und gegen die Geberwelle 14 verspannt. Anstelle der Wellfederscheibe 40 wird ein Keilring 48 verwendet. Der Umfangsflansch 30 der Spannhülse 26 und der Umfangsflansch 36 des Spannrings 28 weisen einander zugekehrte konische Keilflächen 50 bzw. 52 auf, wie am besten in Figur 6 zu sehen ist. Zwischen die Keilflächen 50 und 52 greift der Keilring 48 ein, der hierzu mit einem sich radial nach innen verjüngenden keilförmigen Profilquerschnitt ausgebildet ist. Der Keilring 48 ist durch einen radialen Spalt getrennt und kann mittels einer Spannschraube 54 zusammengezogen werden, so dass er mit seinem Keilprofil zwischen die Keilflächen 50 und 52 eindringt und die Umfangsflansche 30 und 36 axial auseinander drückt, um einerseits den Spannring 28 mit seinen Spannbacken 38 und andererseits die Spannhülse 26 mit ihren Spannbacken 34 zwischen der Geberwelle 14 und der Antriebswelle 12 zu klemmen.

Ein weiterer geringfügiger Unterschied gegenüber der ersten Ausführungsform besteht darin, dass die Spannhülse 26 nicht mit einem in Umfangsrichtung geschlossenen Umfangsflansch 30 ausgebildet ist. Anstelle des geschlossenen Umfangsflansches 30 sind nur an den Spannarmen 32 angeformte Flanschsegmente 30' vorgesehen, die durch einen Stützring 56 axial, radial und in ihrer Winkelstellung gehalten werden. Der Stützring 56 entspricht in seiner Form dem Stützring 42 und ist in entsprechender Weise in Rastausnehmungen am Innenumfang der Flanschsegmente 30' eingeklipst.

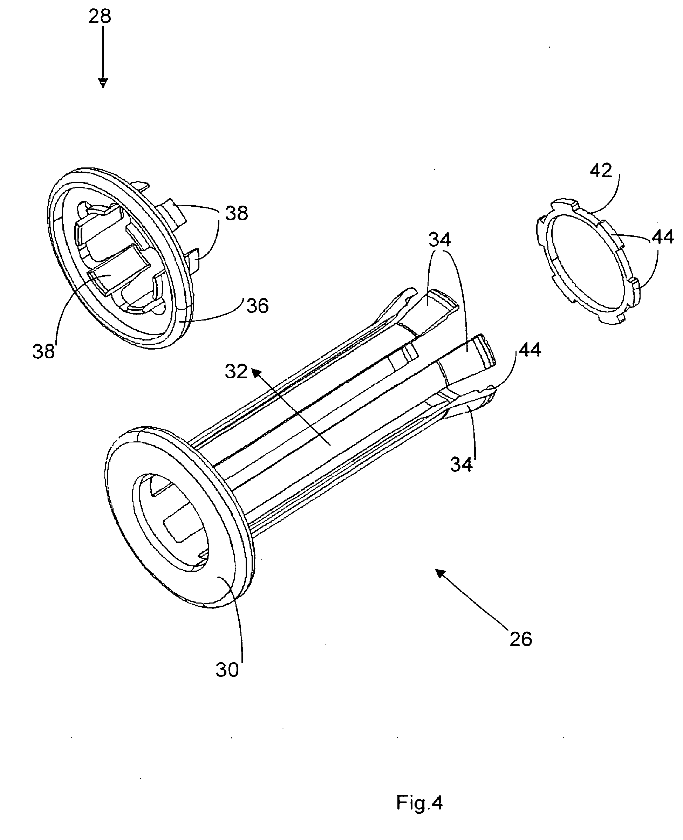

In einer weiteren, nicht dargestellten Ausführung, kann das Kraftelement ein radial wirkender Klemmring mit elastischen Zonen sein, der auf schräge Außenflächen der Umfangsflansche der beiden Spannzangen wirkt und über diese die Spannzangen axial gegeneinander verschiebt. Dadurch werden die Spannbacken gegen die entsprechenden Anlageschrägen der Geberwelle gezogen und verkeilen so die Geberwelle mit der Antriebswelle. Die Form der Spannhülse 26 und des Spannrings 28 ähneln denen der Figur 4 wobei die Bewegungsrichtung entgegengesetzt ist. Die Spannhülse ist im Bereich des Umfangsflansches mit Durchbrüchen versehen, durch die die Spannbacken des Spannrings greifen können.

### Bezugszeichenliste

- 10: Drehgeber
- 12: Antriebswelle
- 14: Geberwelle
- 16: Gehäuse
- 18: Entriegelungsplatten
- 19: Abdeckkappe

- 20: Gehäuseteil
- 22: Federn
- 24: Radialwälzlager
- 26: Spannhülse
- 28: Spannring
- 30: Umfangsflansch
- 30': Flanschsegmente

- 32: Spannarme
- 34: Spannbacken
- 36: Umfangsflansch
- 38: Spannbacken

- 40: Wellfederscheibe
- 42: Stützring
- 44: Rastausnehmungen
- 46: Vorsprünge
- 48: Keilring

- 50: Keilfläche
- 52: Keilfläche
- 54: Spannschraube
- 56: Stützring

## Patentansprüche

1. Drehgeber mit einer Spannzangen-Einrichtung und einer Geberwelle (14), die koaxial auf eine zu messende Antriebswelle (12) aufschiebbar und mittels einer Spannzangen-Einrichtung auf der Antriebswelle (12) klemmbar ist, wobei die Geberwelle (14) als axial durchgehend hohle Welle ausgebildet ist, durch welche die Antriebswelle (12) koaxial hindurchschiebbar ist,
**dadurch gekennzeichnet, dass** die Spannzangen-Einrichtung zwei Spannzangen (26, 28) aufweist, die an den entgegengesetzten Enden der Geberwelle (14) jeweils mit Spannbacken (34, 38) die Geberwelle (14) auf der Antriebswelle (12) klemmen, dass die eine Spannzange als Spannhülse (26) die Geberwelle (14) koaxial durchsetzt und dass ein Kraftelement (40, 48) eine axiale Kraft auf die zwei Spannzangen (26, 28) ausübt, wodurch die Spannzangen (26, 28) gegeneinander und gegen die Geberwelle (14) verschiebbar sind, um die Klemmkraft ihrer jeweiligen Spannbacken (34, 38) zu erzeugen.

2. Drehgeber nach Anspruch 1,
**dadurch gekennzeichnet, dass** die zwei Spannzangen (26, 28) jeweils einen Umfangsflansch (30, 30', 36) aufweisen und dass das Kraftelement (40, 48) zwischen diesen Umfangsflanschen (30, 30', 36) angeordnet ist und eine die Umfangsflansche (30, 30', 38) axial auseinanderschiebende Kraft ausübt.

3. Drehgeber nach Anspruch 2,
**dadurch gekennzeichnet, dass** das Kraftelement eine axial wirkende Feder, insbesondere eine Wellfederscheibe (40) ist.

4. Drehgeber nach einem der Ansprüche 1 bis 3,
**dadurch gekennzeichnet, dass** eine Entriegelungseinrichtung vorgesehen ist, durch welche die Spannzangen (26, 28) für die Montage und Demontage in ihrer Freigabestellung gehalten werden können.

5. Drehgeber nach Anspruch 3 und 4,
**dadurch gekennzeichnet, dass** die Entriegelungseinrichtung zwei Entriegelungsplatten (18) aufweist, die durch Verdrehen einer Abdeckkappe (19) des Gehäuses (16) über schräge Ebenen axial gegeneinander drückbar sind, um die Umfangsflansche (30, 36) gegen die Kraft der Feder (40) zusammen zu drücken.

6. Drehgeber nach Anspruch 2,
**dadurch gekennzeichnet, dass** das Kraftelement ein Keilring (48) ist.

7. Drehgeber nach Anspruch 1,
**dadurch gekennzeichnet, dass** die zwei Spannzangen (26, 28) jeweils einen Umfangsflansch aufweisen und dass das Kraftelement auf Außenflächen der Umfangsflansche wirkt und diese axial gegeneinander schiebt.

8. Drehgeber nach Anspruch 7,
**dadurch gekennzeichnet, dass** das Kraftelement ein Klemmring ist, der die Umfangsflansche radial von außen umgreift.

9. Drehgeber nach einem der vorhergehenden Ansprüche,
**dadurch gekennzeichnet, dass** die als Spannhülse (26) ausgebildete Spannzange die Geberwelle (14) axial durchsetzende Spannarme (32) aufweist, an deren freiem Ende jeweils die Spannbacken (34) ausgebildet sind.

10. Drehgeber nach Anspruch 9,
**dadurch gekennzeichnet, dass** die Spannarme (32) federnd nach innen biegbar sind und an ihrem freien Ende durch einen Stützring (42) radial abstützbar sind.

11. Drehgeber nach Anspruch 9,
**dadurch gekennzeichnet, dass** die zweite Spannzange als Spannring (28) ausgebildet ist, der koaxial auf der Spannhülse (26) sitzt und mit seinen Spannbacken (38) radial zwischen die Spannarme (32) der Spannhülse (26) eingreift.

12. Drehgeber nach einem der vorhergehenden Ansprüche,
**dadurch gekennzeichnet, dass** die Spannzangen (26, 28) aus einem elektrisch isolierenden Werkstoff, insbesondere Kunststoff, bestehen.

## Claims

1. A rotary encoder having a collet chuck apparatus and having a pickup shaft (14) that can be slid coaxially onto a drive shaft (12) that is to be measured and clamped on the drive shaft (12) by means of a collet chuck apparatus, wherein the pickup shaft (14) is constructed as an axially continuous hollow shaft through which the drive shaft (12) is coaxially insertable;
**characterized in that** the collet chuck apparatus has two collet chucks (26, 28) that each clamp the pickup shaft (14) on the drive shaft (12) with clamping jaws (34, 38) on the opposing ends of the pickup shaft (14); the one collet chuck penetrates the pickup shaft (14) coaxially as a clamping sleeve (26); and a force element (40, 48) exerts an axial force on the two collet chucks (26, 28), whereby the collet chucks (26, 28) are movable against each other and against the pickup shaft (14) in order to produce the clamping force of their respective clamping jaws (34, 38).

2. The rotary encoder according to Claim 1,
**characterized in that** the two collet chucks (26, 28) each have a circumferential flange (30, 30', 36), and the force element (40, 48) is positioned between these circumferential flanges (30, 30', 36) and exerts a force that pushes the circumferential flanges (30, 30', 38) apart axially.

3. The rotary encoder according to Claim 2,
**characterized in that** the force element is an axially acting spring, in particular a rippled spring washer (40).

4. The rotary encoder according to one of Claims 1 through 3,
**characterized in that** an unlocking apparatus is provided by which the collet chucks (26, 28) can be held in their released position for assembly and disassembly.

5. The rotary encoder according to Claims 3 and 4,
**characterized in that** the unlocking apparatus has two unlocking plates (18) that can be pressed against other each axially by rotating a covering cap (19) of the housing (16) over inclined planes in order to press the circumferential flanges (30, 36) together against the force of the spring (40).

6. The rotary encoder according to Claim 2,
**characterized in that** the force element is a wedge ring (48).

7. The rotary encoder according to Claim 1,
**characterized in that** the two collet chucks (26, 28) each have a circumferential flange, and that the force element acts on outside surfaces of the circumferential flanges and slides them axially toward each other.

8. The rotary encoder according to Claim 7,
**characterized in that** the force element is a clamping ring that reaches around the circumferential flanges radially from outside.

9. The rotary encoder according to one of the preceding claims,
**characterized in that** the collet chuck constructed as a clamping sleeve (26) has clamping arms (32) that axially penetrate the pickup shaft (14), at whose free ends the clamping jaws (34) are constructed.

10. The rotary encoder according to Claim 9,
**characterized in that** the clamping arms (32) can be bent flexibly inward and are supportable radially at their free end by a support ring (42).

11. The rotary encoder according to Claim 9,
**characterized in that** the second collet chuck is constructed as a clamping ring (28) that sits coaxially on the clamping sleeve (26) and reaches radially with its clamping jaws (38) between the clamping arms (32) of the clamping sleeve (26).

12. The rotary encoder according to one of the preceding claims,
**characterized in that** the collet chucks (26, 28) are made of an electrically insulating material, in particular a synthetic.

## Revendications

1. Capteur de rotation comportant une installation à pinces, un arbre de capteur (14) emmanché coaxialement sur un arbre moteur (12) à mesurer et serré sur l'arbre moteur (12) par l'installation à pinces,
l'arbre de capteur (14) étant un arbre creux traversant, axialement, à travers lequel on peut engager coaxialement l'arbre moteur (12),
**caractérisé en ce que**
l'installation à pinces comprend deux pinces (26, 28) qui, à l'aide de mors (34, 38) prévus aux extrémités opposées de l'arbre de capteur (14), serrent l'arbre de capteur (14) sur l'arbre moteur (12),
l'une des pinces étant en forme de manchon de serrage (26) traversant coaxialement l'arbre de capteur (14) et un élément dynamique (40, 48) exerce une force axiale sur les deux pinces (26, 28) pour que les pinces (26, 28) soient coulissées l'une par rapport à l'autre et contre l'arbre de capteur (14) pour créer la force de serrage exercée sur les mors respectifs (34, 38).

2. Capteur de rotation selon la revendication 1,
**caractérisé en ce que**
les deux pinces (26, 28) ont chacune une bride périphérique (30, 30', 36), et l'élément dynamique (40, 48) est installé entre les brides périphériques (30, 30', 36) et exerce une force écartant axialement les brides périphériques (30, 30', 38).

3. Capteur de rotation selon la revendication 2,
**caractérisé en ce que**
l'élément dynamique est un ressort à effet axial notamment une rondelle à ressort ondulée (40).

4. Capteur de rotation selon l'une des revendications 1 à 3,
**caractérisé par**
une installation de déverrouillage permettant de tenir en position de libération les pinces (26, 28) pour le montage et le démontage.

5. Capteur de rotation selon l'une des revendications 3 et 4,
**caractérisé en ce que**
l'installation de déverrouillage comporte deux plaques de déverrouillage (18) poussées axialement l'une contre l'autre par rotation d'un capot (19) du boîtier (16) par des plans inclinés; pour comprimer la bride périphérique (30, 36) contre la force du ressort (40).

6. Capteur de rotation selon la revendication 2,
**caractérisé en ce que**
l'élément dynamique est une bague conique (48).

7. Capteur de rotation selon la revendication 1,
**caractérisé en ce que**
les deux pinces (26, 28) ont chacune une bride périphérique et l'élément dynamique agit sur les surfaces extérieures des brides périphériques pour les déplacer axialement l'une par rapport à l'autre.

8. Capteur de rotation selon la revendication 7,
**caractérisé en ce que**
l'élément dynamique est une bague de serrage qui entoure radialement la bride périphérique.

9. Capteur de rotation selon l'une des revendications précédentes,
**caractérisé en ce que**
la pince en forme de manchon de serrage (26) comporte des bras de serrage (32) traversant axialement l'arbre de capteur (14) et dont chaque extrémité libre est en forme de mors (34).

10. Capteur de rotation selon la revendication 9,
**caractérisé en ce que**
les bras de serrage (32) peuvent fléchir élastiquement vers l'intérieur et leurs extrémités libres sont soutenues radialement par une bague d'appui (42).

11. Capteur de rotation selon la revendication 9,
**caractérisé en ce que**
la seconde pince est en forme de bague de serrage (28) installée coaxialement sur le manchon de serrage (26) et dont les mors (38) pénètrent radialement entre les bras de serrage (32) du manchon de serrage (26).

12. Capteur de rotation selon l'une des revendications précédentes,
**caractérisé en ce que**
les pinces (26, 28) sont en une matière électriquement isolante, notamment en matière plastique.
